# EUROPÄISCHE PATENTSCHRIFT

(11) **EP 3 568 279 B1**
(45) Veröffentlichungstag und Bekanntmachung des Hinweises auf die Patenterteilung: **31.03.2021**
(21) Anmeldenummer: 18704494.6
(22) Anmeldetag: 02.02.2018
(51) Int. Cl.: B29C 64/106, B29C 48/02, B29C 48/25, B29C 48/92, B29C 64/321, B33Y 30/00, B33Y 40/00, B29C 48/285, B65G 53/12

(54) **ADDITIVE FERTIGUNG MIT PNEUMATISCHER FÖRDERGUTFÖRDERUNG MITTELS ÜBERDRUCK**
ADDITIVE MANUFACTURING WITH PNEUMATIC BULK CONVEYOR USING OVERPRESSURE
FABRICATION ADDITIVE AVEC TRANSPORT PNEUMATIQUE DE PRODUIT EN VRAC PAR SURPRESSION

(30) Priorität: 23.02.2017 EP 17157668
(43) Veröffentlichungstag der Anmeldung: 20.11.2019
(73) Patentinhaber: Siemens Aktiengesellschaft, 80333 München (DE)
(72) Erfinder: JÄHNICKE, Jens, 09112 Chemnitz (DE); OCHSENKÜHN, Manfred, 92348 Berg (DE); WOLFRUM, Sonja, 91056 Erlangen (DE)
(86) Internationale Anmeldenummer: PCT/EP2018/052690
(87) Internationale Veröffentlichungsnummer: WO 2018/153639

(56) Entgegenhaltungen:
- EP-A1- 2 886 277
- EP-A1- 3 117 982
- WO-A1-2016/088042
- DE-A1- 19 943 504
- US-A1- 2002 187 012

## Beschreibung

Die vorliegende Erfindung geht aus von einem Betriebsverfahren für eine Fertigungsmaschine,
- wobei ein aus Körnern mit einer mittleren Korngröße bestehendes Fördergut aus einem Gefäß an einer Einspeisestelle in eine Förderleitung eingespeist wird, von dort über die Förderleitung zu einer Ausspeisestelle gefördert wird, dort aus der Förderleitung ausgespeist und einem Extrusionskopf zugeführt wird,
- wobei das Fördergut im Extrusionskopf plastifiziert und nach dem Plastifizieren über eine Düse des Extrusionskopfes punktuell extrudiert wird,
- wobei der Extrusionskopf während des Extrudierens des plastifizierten Förderguts mittels eines Manipulators dynamisch verfahren wird,
- wobei ein Fördergas im Bereich der Einspeisestelle mittels eines Gasverdichters in die Förderleitung eingedrückt wird und im Bereich der Ausspeisestelle an einer Abscheidestelle aus der Förderleitung entweicht.

Die vorliegende Erfindung geht weiterhin aus von einer Fertigungsmaschine,
- wobei die Fertigungsmaschine ein Druckgefäß, eine Förderleitung mit einer Einspeisestelle und einer Ausspeisestelle, einen Extrusionskopf mit einer Düse, einen Manipulator und einen Gasverdichter aufweist,
- wobei ein aus Körnern mit einer mittleren Korngröße bestehendes Fördergut aus dem Gefäß an der Einspeisestelle in die Förderleitung eingespeist wird, über die Förderleitung zur Ausspeisestelle gefördert wird, dort aus der Förderleitung ausgespeist wird und dem Extrusionskopf zugeführt wird,
- wobei das Fördergut im Extrusionskopf plastifiziert und nach dem Plastifizieren über die Düse extrudiert wird,
- wobei der Extrusionskopf an dem Manipulator angeordnet ist und während des Extrudierens des plastifizierten Förderguts mittels des Manipulators dynamisch verfahren wird,
- wobei mittels des Gasverdichters im Bereich der Einspeisestelle ein Fördergas in die Förderleitung eingedrückt wird und im Bereich der Ausspeisestelle an einer Abscheidestelle aus der Förderleitung entweicht.

Ein derartiges Betriebsverfahren und die zugehörige Fertigungsmaschine werden beispielsweise im Rahmen der additiven Fertigung - umgangssprachlich oftmals als FDM = Fused Deposition Modeling oder als FFF = Fused Filament Fabrication bezeichnet - verwendet. Bei diesem Verfahren wird ein schmelzfähiges Material - in der Regel ein Kunststoff - als Granulat oder Pulver einem Extrusionskopf zugeführt, dort aufgeschmolzen und über eine Düse des Extrusionskopfes punktuell auf eine Struktur aufgebracht. Dadurch wird Schicht für Schicht ein Produkt erzeugt.

Im Rahmen der additiven Fertigung wird dem Extrusionskopf das zu verarbeitende Material während des Fertigungsprozesses zugeführt. Dadurch ergibt sich die Notwendigkeit, das Fördergut kontinuierlich der sich laufend ändernden Position des Extrusionskopfes - manchmal sogar gegen die Schwerkraft - zuzuführen. Das Fördergut ist - allgemein gesprochen - ein trockener disperser Feststoff. Derartige Stoffe können insbesondere mittels mechanischer Förderung (beispielsweise über Förderschnecken) gefördert werden. Diese Förderungsart weist die Vorteile einer guten Dosierung und die Möglichkeit zur kontinuierlichen Betriebsweise auf. Nachteilig ist jedoch, dass die Körner des Förderguts oftmals sehr klein sind, so dass rein mechanische Lösungen der Gefahr einer Verklemmung unterliegen. Alternativ zu einer mechanischen Förderung kann das Fördergut auch pneumatisch gefördert werden. Bei der pneumatischen Förderung werden die Körner des Förderguts mittels eines Luft- oder anderen Gasstroms durch Rohre über größere Entfernungen (manchmal mehrere 100 m) gefördert. Bei der pneumatischen Förderung unterscheidet man prinzipiell zwischen Saugförderung und Druckförderung. Bei der Saugförderung befindet sich die Förderleitung auf der Unterdruckseite des Gasverdichters, bei der Druckförderung auf der Überdruckseite des Gasverdichters. Bei der Druckförderung steht weiterhin auch das Vorratsgefäß, über welches das Fördergut in die Förderleitung eingespeist wird, unter Druck. Es ist daher als Druckgefäß ausgebildet. Beim pneumatischen Transport von Fördergut (das sind im Rahmen der vorliegenden Erfindung Pulver und Granulate) erfolgt üblicherweise eine Saugförderung. Eine Saugförderung ist insbesondere bei der Fördergutzufuhr zu Kunststoffspritzgießmaschinen üblich. Bei der Saugförderung sind relativ große, voluminöse Bauteile erforderlich, die im Bereich der Ausspeisestelle angeordnet werden müssen. Bei den üblichen, stationär betriebenen Kunststoffspritzgießmaschinen können diese Bauteile problemlos angeordnet werden. Bei der additiven Fertigung hingegen wird der Extrusionskopf dynamisch bewegt. Würden bei einem derartigen Sachverhalt die zugehörigen Bauteile für die Saugförderung am Extrusionskopf angeordnet werden, würde dies zu einer verringerten Präzision, zu einer verringerten Dynamik und zu einer Beschränkung der Bewegungsfreiheit des Extrusionskopfes führen.

Aus der EP 3117982 A1 sind ein 3D-Drucksystem und ein 3D-Druckverfahren bekannt, bei denen ein Druckkopf mit einer Düse relativ zu einer Bauplattform bewegt wird. In dem Druccknopf werden Pellets extrudiert, die den Druckkopf mittels einer flexiblen Leitung unter Anwendung von Druckluft aus einem Vorratsbehälter zugeführt werden.

Aus der Druckschrift DE 19943504 A1 sind ein Verfahren und eine Vorrichtung zur pneumatischen Förderung von Schüttgut bekannt, bei denen das Schüttgut durch eine fördernde Leitung an mindestens einem Aufgabeort mittels eines Schleusorgans in einen einstellbaren Fördergasstrom eingespeist und in Form diskreter, durch Polster aus Fördergas zueinander beabstandeter Schüttgutpfropfen vom Aufgabeort zu mindestens einem Zielort transportiert werden.

Aus der WO 2016/088042 A1 ist ein Automatisierungssystem für einen additiven Fertigungsprozess bekannt, das unter anderem ein Fließband sowie einen beweglichen Materialdruckkopf umfasst. Ein zu druckendes Filament wird dem Druckkopf mittels einer flexiblen Leitung aus einem Vorratsbehälter zugeführt.

Die Aufgabe der vorliegenden Erfindung besteht darin, Möglichkeiten zu schaffen, mittels derer auf einfache und effiziente Weise eine zuverlässige Versorgung des Extrusionskopfes mit Fördergut gewährleistet werden kann.

Die Aufgabe wird durch ein Betriebsverfahren für eine Fertigungsmaschine mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet,
- dass das Fördergut zum Einspeisen in die Förderleitung mittels des Gasverdichters unter Umgehung der Förderleitung über ein erstes Ventil temporär mit einem Gas-Überdruck beaufschlagt wird, und
- dass während des Beaufschlagens des Druckgefäßes mit dem Gas-Überdruck ein in der Förderleitung zwischen der Einspeisestelle und dem Gasverdichter angeordnetes zweites Ventil geschlossen wird.

Die Grundidee der vorliegenden Erfindung besteht also darin, von der Einspeisestelle aus eine Druckkraft auf das in der Förderleitung geförderte Fördergut auszuüben. Insbesondere erfolgt daher kein von der Ausspeisestelle ausgehendes Ansaugen des Förderguts, wodurch eine Zugkraft auf das in der Förderleitung befindliche Fördergut ausgeübt würde. Die Implementierung als Druckförderung ermöglicht insbesondere, einen Förderzustand in der Förderleitung gezielt einzustellen und dadurch den Förderprozess gezielt an das zu fördernde Fördergut anzupassen.

Das Fördergut wird zum Einspeisen in die Förderleitung mittels des Gasverdichters unter Umgehung der Förderleitung über ein erstes Ventil temporär mit dem Überdruck beaufschlagt. Das Einspeisen des Förderguts in die Förderleitung wird hierbei dadurch besonders effizient gestaltet, dass während des Beaufschlagens des Druckgefäßes mit dem Überdruck ein in der Förderleitung zwischen der Einspeisestelle und dem Gasverdichter angeordnetes zweites Ventil geschlossen wird.

Das Fördergas sollte an der Ausspeisestelle möglichst vollständig aus dem geförderten Massenstrom entfernt werden, so dass also dem Extrusionskopf das Fördergut möglichst gasfrei zugeführt wird. Eine besonders effiziente Ausgestaltung der Ausspeisestelle ist dadurch gegeben, dass die Ausspeisestelle das letzte Stück der Förderleitung bildet und als für das Fördergas durchlässiger Schlauch ausgebildet ist.

Bei der Förderung von Fördergut, also Granulaten, Pulvern und ähnlichen Substanzen, durch ein Fördergas sind verschiedene Förderarten bekannt. Diese werden nachstehend nacheinander erläutert. Im Rahmen der nachfolgenden Ausführungen wird hierbei zunächst angenommen, dass die Förderleitung horizontal verläuft.
- Bei der Flugförderung sind die Partikel im wesentlichen über den gesamten Rohrquerschnitt verteilt. Größere Partikel wie beispielsweise Kunststoffgranulate prallen gegeneinander und gegen die Wandung der Förderleitung und werden dadurch mit Impulsen beaufschlagt, die sowohl Querbewegungen als auch Rotationsbewegungen hervorrufen. Bei feineren Partikeln werden derartige Bewegungen bereits durch die Turbulenz der Gasströmung als solche hervorgerufen. Aufgrund der Schwerkraft befinden sich bei horizontaler Förderung mehr Partikel am Boden der Förderleitung. Je langsamer das Fördergas strömt und/oder je schwerer die Partikel sind, desto stärker sammeln sich die Partikel am Boden der Förderleitung an.
- Reicht die Abstimmung der Geschwindigkeit des Fördergases und der Masse der Partikel aufeinander nicht mehr aus, um eine Flugförderung zu bewirken, setzen sich einige Partikel am Boden der Förderleitung ab und wird dort als sogenannte Strähne mehr oder weniger schnell weitertransportiert. Dieser Zustand wird als Strähnenförderung bezeichnet. Die Transportbewegung wird in diesem Zustand teilweise von aufprallenden Partikeln und teilweise durch Widerstandskräfte der im verengten Querschnitt schnelleren Gasströmung verursacht.
- Falls eine hinreichend große Reibung der Partikel an der Wandung der Förderleitung besteht, geht die Strähnenförderung in eine sogenannte Strähnenförderung über ruhender Ablagerung über. Die Geschwindigkeit der Gasströmung entspricht in diesem Fall in etwa der Sinkgeschwindigkeit der Partikel.
- Sinkt die Geschwindigkeit der Gasströmung noch weiter (oder steigt die Masse der Partikel entsprechend an), wird der Feststoff nur noch dünenartig gefördert, d.h. von hinten werden Partikel zwar über die Kuppen der Dünen geweht, lagern sich aber gleich hinter den Kuppen im Windschatten wieder an die Dünen an. Dieser Zustand wird als Dünenförderung bezeichnet.
- Sinkt die Geschwindigkeit der Gasströmung noch weiter (oder steigt die Masse der Partikel entsprechend an), bilden sich aus den Dünen Ballen, die einen großen Teil des Querschnitts der Förderleitung einnehmen. Sie werden nur langsam durch die Förderleitung gefördert. Dieser Zustand wird als Ballenförderung bezeichnet.
- Sowohl die Dünenförderung als auch die Ballenförderung sind instabile Zustände, die sich bereits bei geringfügigen Schwankungen der Gasströmung und/oder des Massenstroms stark verändern können. Sie können die Förderleitung verstopfen, wenn der Gasverdichter nicht genügend Druckreserven hat. Schließlich füllen die Ballen abschnittweise den gesamten Querschnitt der Förderleitung aus und es bilden sich Pfropfen. Das Fördergut kann in diesem Fall nur noch dann gefördert werden, wenn die Druckkraft auf den Pfropfen dessen Reibung an der Wandung der Förderleitung überwindet (sogenannte Pfropfenförderung). Bei relativ feinem oder mittelgrobem Fördergut mit starker Reibung zur Wanderung kann die Pfropfenbildung die Anlage verstopfen. Der Düneneffekt tritt bei Pfropfenförderung nur noch im obersten Bereich der Förderleitung auf. Im übrigen Bereich rieselt ein Teil des Feststoffs auf der Rückseite des Pfropfens (d.h. auf der der Druckseite zugewandten Seite) wieder herunter und wird auf der Vorderseite des nachfolgenden Pfropfens wieder aufgenommen. Die Länge des Pfropfens ist unbestimmt. Somit ist auch dieser Zustand instabil. Durch geeignete, auch im Stand der Technik bekannte zusätzliche Maßnahmen können jedoch auch bei Pfropfenförderung stabile Zustände erreicht werden.

Die obenstehend für den Fall einer horizontalen Förderung erläuterten Förderarten treten in ähnlicher Weise auch bei einer vertikalen Förderung auf. Dies ist Fachleuten allgemein bekannt.

Die reine Flugförderung wird oftmals auch als Dünnstromförderung bezeichnet, für die anderen Förderarten wird als Sammelbegriff oftmals auch die Bezeichnung Dichtstromförderung verwendet. Bei einer Flugförderung lassen sich in der Regel nur relativ geringe Beladungen erzielen, die meist bei maximal 15:1 liegen. Beladung ist definiert als das Verhältnis von geförderter Masse an Fördergut und geförderter Masse an Fördergas. Die Flugförderung wird in der Praxis am häufigsten realisiert. Gründe hierfür sind die niedrigen erforderlichen Druckdifferenzen und die Einfachheit der Gewährleistung eines betriebssicheren, stabilen Betriebszustands. Im Rahmen der vorliegenden Erfindung erfolgt in der Förderleitung jedoch vorzugsweise eine Dichtstromförderung, insbesondere eine Pfropfenförderung. Bei einer Dichtstromförderung lassen sich erheblich größere Beladungen realisieren, beispielsweise von 100:1 oder darüber, teilweise sogar bis zu 400:1.

Bei der pneumatischen Förderung werden weiterhin verschiedene Druckbereiche unterschieden. Der Druckbereich zwischen 0,2 bar und 1 bar wird üblicherweise als Mitteldruckförderung bezeichnet. Die Verwendung von Drücken unter 0,2 bar wird als Niederdruckförderung bezeichnet, die Verwendung von Drücken oberhalb von 1 bar (in der Regel bis maximal 10 bar) wird als Hochdruckförderung bezeichnet. Bei der Niederdruckförderung werden Ventilatoren als Gasverdichter eingesetzt. Die Strömungsgeschwindigkeit des Fördergases kann bis zu 30 m/s betragen. Die Beladung liegt in der Regel bei bis zu 5:1. Bei der Mitteldruckförderung werden üblicherweise Drehkolbengebläse eingesetzt. Die Strömungsgeschwindigkeit des Fördergases liegt meist zwischen 15 m/s und 40 m/s. Die Beladung liegt in der Regel zwischen 5:1 und 20:1. Bei der Hochdruckförderung sind als Gasverdichter Schraubenverdichter oder Kolbenverdichter erforderlich. Die Strömungsgeschwindigkeit des Fördergases kann relativ gering sein, beispielsweise ca. 2 m/s bis ca. 10 m/s. Die Beladung kann Werte oberhalb von 100:1 erreichen, insbesondere bis zu 150:1 und in manchen Fällen sogar bis zu 400:1. Im Rahmen der vorliegenden Erfindung wird vorzugsweise eine Hochdruckförderung realisiert. Der Überdruck liegt daher vorzugsweise oberhalb von 1 bar.

Vorzugsweise beträgt die mittlere Korngröße mindestens 0,5 mm. Eine mittlere Korngröße von 2,0 mm - besser 1,5 mm und noch besser 1,0 mm - sollte jedoch nicht überschritten werden. Die Körner sind vorzugsweise kugelförmig ausgebildet. Im Falle von Abweichungen von der exakten Kugelform sollte die statistische Streuung des Abstands einzelner Oberflächenpunkte vom Schwerpunkt des jeweiligen Korns maximal 10 % betragen. Die mittlere Korngröße sollte weiterhin vorzugsweise möglichst einheitlich sein. Insbesondere sollte die statistische Streuung (1σ-Varianz) der mittleren Korngröße maximal 20 % betragen.

Um einen stabilen Betrieb zu gewährleisten, wird vorzugsweise mittels mindestens eines Sensors ein Förderzustand in der Förderleitung erfasst. Der Förderzustand wird in diesem Fall in einer Regeleinrichtung mit einem Sollförderzustand verglichen. Von der Regeleinrichtung kann dadurch das Einspeisen des Förderguts in die Förderleitung und/oder das Fördern des Förderguts in der Förderleitung in Abhängigkeit von dem Vergleich geregelt werden.

Zum Erfassen des Förderzustands kann beispielsweise durch Drucksensoren an bestimmten Stellen der Förderleitung der jeweilige lokale Druck erfasst werden. Aus der Auswertung des Druckes oder dessen zeitlichen Verlaufs oder (im Falle von mehreren Erfassungsstellen) des örtlichen Verlaufs oder des zeitlich-örtlichen Verlaufs kann dann auf den Förderzustand geschlossen werden. Das Regeln des Einspeisens des Förderguts in die Förderleitung kann beispielsweise durch Variieren des Rhythmus, mit dem das Einspeisen erfolgt, vorgenommen werden. Im einfachsten Fall kann hierzu die Periode, mit der das Einspeisen erfolgt, variiert werden. Zur Beeinflussung der Förderung des Förderguts in der Förderleitung ist es beispielsweise möglich, an vorbestimmten Stellen zusätzlich Fördergas in die Förderleitung einzublasen. Hierzu können entsprechende Ventile vorgesehen sein, über welche die Zufuhr von Fördergas zu den vorbestimmten Stellen eingestellt werden kann. Vorzugsweise ist zu diesem Zweck eine Gasleitung (also eine Leitung, in der ausschließlich das Fördergas, nicht aber das Fördergut gefördert wird) parallel zur Förderleitung verlegt.

Die Aufgabe wird weiterhin durch eine Fertigungsmaschine mit den Merkmalen des Anspruchs 10 gelöst. Vorteilhafte Ausgestaltungen der Fertigungsmaschine sind Gegenstand der abhängigen Ansprüche 11 bis 15.

Erfindungsgemäß wird eine Fertigungsmaschine der eingangs genannten Art dadurch ausgestaltet,
- dass der Gasverdichter unter Umgehung der Förderleitung über ein erstes Ventil mit dem Druckgefäß verbunden ist und dass der Gasverdichter das Druckgefäß zum Einspeisen des Förderguts in die Förderleitung durch Öffnen des ersten Ventils temporär mit einem Gas-Überdruck beaufschlagt, und
- dass der Gasverdichter mit der Förderleitung über ein zweites Ventil verbunden ist und dass das zweite Ventil während des Beaufschlagens des Druckgefäßes mit dem Gas-Überdruck geschlossen wird.

Die vorteilhaften Ausgestaltungen der Fertigungsmaschine korrespondieren im wesentlichen mit denen des Betriebsverfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Fertigungsmaschine,
- FIG 2: ein Zeitdiagramm,
- FIG 3: einen Endabschnitt einer Förderleitung,
- FIG 4: einen Ausschnitt einer Förderleitung,
- FIG 5: ein Korn eines Förderguts,
- FIG 6: eine statistische Auswertung einer Korngröße,
- FIG 7: eine statistische Auswertung einer mittleren Korngröße und
- FIG 8: eine Regelstruktur.

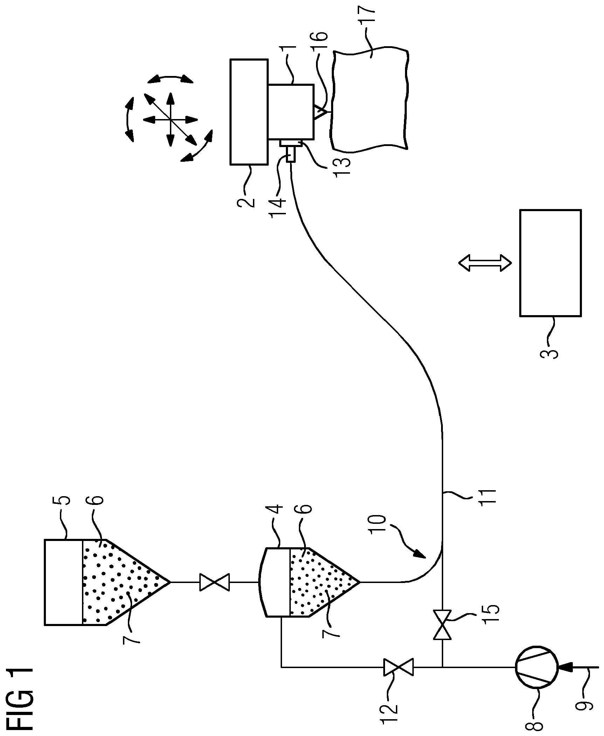

Gemäß FIG 1 weist eine Fertigungsmaschine für die additive Fertigung - beispielsweise das sogenannte FDM-Verfahren - einen Extrusionskopf 1 auf. Der Extrusionskopf 1 ist an einem Manipulator 2 der Fertigungsmaschine angeordnet. Der Manipulator 2 ist - gesteuert von einer Automatisierungseinrichtung 3 - in automatisierter Weise verfahrbar. Mit dem Verfahren des Manipulators 2 wird zugleich auch der Extrusionskopf 1 verfahren. Das Verfahren des Manipulators 2 erfolgt zumindest in den drei translatorischen Richtungen. Dies ist in FIG 1 durch drei gerade Doppelpfeile angedeutet. Oftmals ist auch ein Verschwenken des Manipulators 2 (und mit ihm des Extrusionskopfes 1) um bis zu drei rotatorische Orientierungen möglich. Dies ist in FIG 1 durch drei gebogene Doppelpfeile angedeutet.

Im Rahmen des Betriebes der Fertigungsmaschine wird zunächst ein Druckgefäß 4 - beispielsweise ein Druckkessel - aus einem Vorratsbehälter 5 - beispielsweise einem Silo - mit einem Fördergut 6 befüllt. Das Druckgefäß 4 ist in der Regel ortsfest angeordnet. Das Fördergut 6 ist in der Regel ein Kunststoff. Alternativ kann es sich in Einzelfällen um ein Metall handeln. Das Fördergut 6 besteht aus einer Vielzahl von Körnern 7. Nach dem Befüllen des Druckgefäßes 4 werden das Druckgefäß 4 und der Vorratsbehälter 5 abgesperrt. Weiterhin wird das Druckgefäß 4 mit einem Überdruck p beaufschlagt. Die Beaufschlagung des Druckgefäßes 4 mit dem Überdruck p erfolgt über einen Gasverdichter 8 der Fertigungsmaschine, der ein Fördergas 9 mit dem Überdruck p beaufschlagt. Der Überdruck p liegt in der Regel oberhalb von 1 bar, z.B. zwischen 1,5 bar und 10 bar. Das Fördergas 9 ist in der Regel Luft. Es kann sich jedoch alternativ auch um ein anderes Gas handeln, beispielsweise ein Schutzgas. Der Gasverdichter 8 sollte eine möglichst steile Kennlinie (hoher Anstieg des Druckverlusts in Abhängigkeit der Geschwindigkeit des aus dem Gasverdichter 8 austretenden Fördergases 9) aufweisen. Beispielsweise kann der Gasverdichter 8 als Drehkolbengebläse oder als aus einem üblichen Druckluftnetz gespeiste Lavaldüse ausgebildet sein.

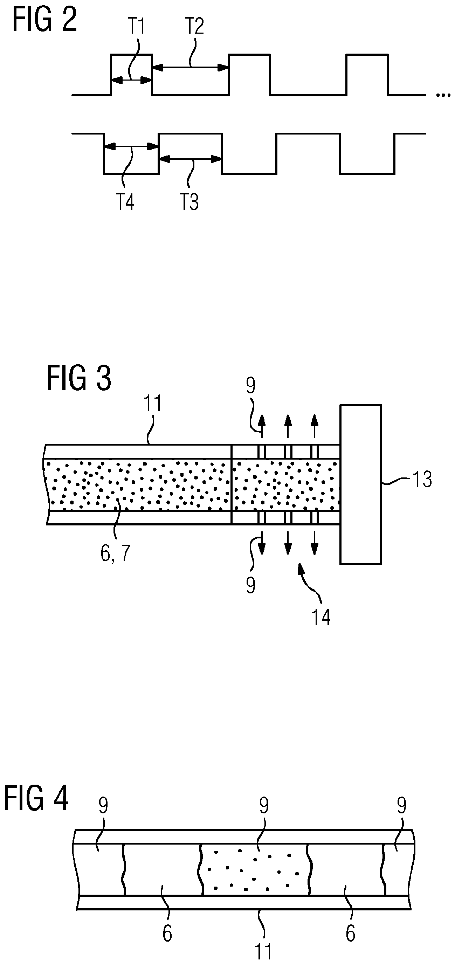

Das Fördergut 6 wird aus dem Druckgefäß 4 an einer Einspeisestelle 10 in eine Förderleitung 11 der Fertigungsmaschine eingespeist. Die Einspeisestelle 10 befindet sich in der Nähe des Druckgefäßes 4. Das Einspeisen des Förderguts 6 in die Förderleitung 11 erfolgt dadurch, dass das Fördergut 6 - siehe ergänzend FIG 2 - mittels des Gasverdichters 8 unter Umgehung der Förderleitung 11 über ein erstes Ventil 12 während erster Zeiträume T1 temporär mit dem Überdruck p beaufschlagt wird. Während hierzu komplementärer zweiter Zeiträume T2 wird in diesem Fall das Druckgefäß 4 nicht mit dem Überdruck p beaufschlagt. Der Gasverdichter 8 ist zur Beaufschlagung des Druckgefäßes 4 mit dem Überdruck p über das erste Ventil 12 unter Umgehung der Förderleitung 11 mit dem Druckgefäß 4 verbunden. Zum Beaufschlagen mit dem

Überdruck p wird das erste Ventil 12 temporär geöffnet, während der übrigen Zeiten wird es geschlossen gehalten. Die Ansteuerung des ersten Ventils 12 erfolgt ebenfalls durch die Automatisierungseinrichtung 3.

Von der Einspeisestelle 9 wird das Fördergut 6 über die Förderleitung 10 zu einer Ausspeisestelle 13 gefördert. Zu diesem Zweck kann das Fördergas 9 mittels des Gasverdichters 8 im Bereich der Einspeisestelle 10 in die Förderleitung 11 eingedrückt werden. An der Ausspeisestelle 13 wird das Fördergut 6 aus der Förderleitung 11 ausgespeist und dem Extrusionskopf 1 zugeführt. Vor dem Ausspeisen und Zuführen entweicht jedoch das Fördergas 9 an einer Abscheidestelle 14 aus der Förderleitung 11. Dadurch wird das Fördergut 6 dem Extrusionskopf 1 nahezu frei von Fördergas 9 zugeführt. Das Entweichen erfolgt automatisch aufgrund des Überdrucks p. Ein aktives Absaugen des Fördergases 9 ist nicht erforderlich.

Die Abscheidestelle 14 kann beispielsweise entsprechend der Darstellung in FIG 3 das letzte Stück der Förderleitung 11 bilden und und als für das Fördergas 9 durchlässiger Schlauch ausgebildet sein. Alternativ kann die Abscheidestelle 14 beispielsweise als Membran mit geeigneter Durchlässigkeit ausgebildet sein. Unabhängig von ihrer konstruktiven Ausgestaltung ist die Abscheidestelle 14 jedoch derart ausgeführt, dass sie zwar einerseits den Durchtritt nur des Fördergases 9 und nicht auch der Körner 7 des Förderguts 6 ermöglicht, andererseits aber dem Fördergas 9 nur einen möglichst geringen Strömungswiderstand entgegensetzt.

Je nach Ausgestaltung der Fertigungsmaschine und Anordnung ihrer einzelnen Komponenten kann die Förderleitung 11 im Einzelfall relativ kurz sein (Länge nur wenige Meter). Ebenso ist es jedoch möglich, dass die Förderleitung 11 eine erhebliche Länge aufweist, beispielsweise mehrere 100 m oder sogar über 1000 m.

Entsprechend der Darstellung in FIG 1 ist zwischen dem Gasverdichter 8 und der Förderleitung 11 ein zweites Ventil 15 angeordnet. Dadurch ist der Gasverdichter 8 mit der Förderleitung 11 über das zweite Ventil 15 verbunden. Das zweite Ventil 15 wird von der Automatisierungseinrichtung 3 gesteuert. Die Ansteuerung kann insbesondere entsprechend der Darstellung in FIG 2 derart erfolgen, dass das zweite Ventil 15 während dritter Zeiträume T3 geöffnet und während hierzu komplementärer vierter Zeiträume T4 geschlossen wird. Entsprechend der Darstellung in FIG 2 erfolgt in diesem Fall die Ansteuerung des ersten und des zweiten Ventils 12, 15 im wesentlichen im Gegentakt. Insbesondere wird somit während des Beaufschlagens des Druckgefäßes 4 mit dem Überdruck p das zweite Ventil 15 geschlossen. Die Ansteuerung im Gegentakt muss nicht direkt 1:1 miteinander korrespondieren. Es kann ausreichen, dass eine gewisse Überlappung besteht.

Im Extrusionskopf 1 wird das Fördergut 6 plastifiziert. Beispielsweise kann es mittels einer Heizeinrichtung (nicht dargestellt) aufgeschmolzen werden. Der Extrusionskopf 1 weist weiterhin eine Düse 16 auf. Nach dem Plastifizieren wird das Fördergut 6 (das nunmehr kein Körner 7 mehr aufweist, sondern eine plastifizierte Masse ist) über die Düse 16 punktuell extrudiert. Die plastifizierte Masse wird auf einen Untergrund 17 (der prinzipiell beliebiger Natur sein kann) aufgetragen. Während des Extrudierens des plastifizierten Förderguts 6 (bzw. der plastifizierten Masse) wird der Extrusionskopf 1 mittels des Manipulators 2 dynamisch verfahren. Dadurch wird die gewünschte Struktur nach und nach aufgebaut. Aufgrund des dynamischen Verfahrens des Extrusionskopfes 1 auch während der Förderung des Förderguts 6 ist die Förderleitung 11 zumindest in bestimmten Abschnitten als flexibler Schlauch ausgebildet. Alternativ oder zusätzlich kann eine Ausgestaltung mit Rohrabschnitten möglich sein, die über Gelenke miteinander verbunden sind.

In der Förderleitung 11 erfolgt entsprechend der Darstellung in FIG 4 vorzugsweise eine Dichtstromförderung, insbesondere eine Pfropfenförderung. Die Beladung kann bei 100:1 oder darüber liegen. Falls im Einzelfall ein andersartiger Betrieb gewünscht wird, kann dies jedoch ohne weiteres - auch automatisiert - eingestellt werden.

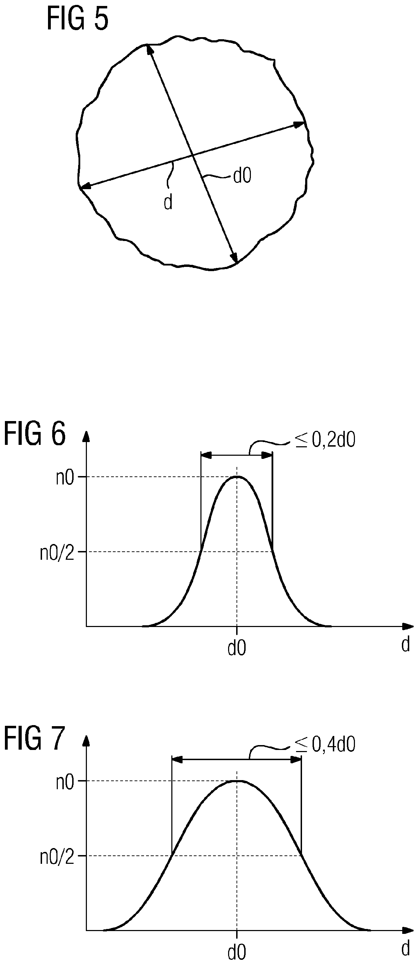

Die Körner 7 des Förderguts 6 sind entsprechend der Darstellung in den FIG 5 vorzugsweise kugelförmig ausgebildet. Sie weisen - siehe ergänzend FIG 6 - eine mittlere Korngröße d0 von mindestens 0,5 mm auf. Innerhalb des jeweiligen Korns 7 sind jedoch geringfügige Schwankungen der Korngröße d als Funktion der Orientierung, unter welcher die Korngröße d ermittelt wird, möglich. Die Schwankung liegt in der Regel maximal im Rahmen von ± 10 %. Die Körner 7 weisen weiterhin von Korn 7 zu Korn 7 eine möglichst einheitliche mittlere Korngröße d0 auf. Insbesondere sollte über eine hinreichend große Vielzahl von Körnern 7 gesehen die statistische Streuung der mittleren Korngröße d0 entsprechend der Darstellung in FIG 7 maximal 20 % betragen. Diese Ausgestaltungen erleichtern die Einstellung eines stabilen Förderzustands.

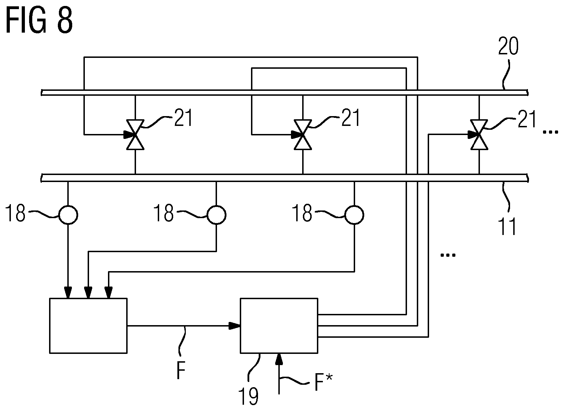

Vorzugsweise wird entsprechend der Darstellung in FIG 8 mittels mindestens eines Sensors 18 (beispielsweise eines Drucksensors) ein Förderzustand F der Förderleitung 11 erfasst. Der Förderzustand F wird einer Regeleinrichtung 19 zugeführt. Die Regeleinrichtung 19 kann beispielsweise als Softwareblock innerhalb der Automatisierungseinrichtung 3 realisiert sein. In der Regeleinrichtung 19 wird der Förderzustand F mit einem Sollförderzustand F* verglichen. In Abhängigkeit von dem Vergleich wird von der Regeleinrichtung 19 das Einspeisen des Förderguts 6 in die Förderleitung 11 und/oder das Fördern des Förderguts 6 in der Förderleitung 11 geregelt.

Beispielsweise kann die Regeleinrichtung 19 die Periode, mit der das Einspeisen erfolgt, - also die Summe der Zeiträume T1 und T2 - variieren. Das Variieren kann alternativ mit oder ohne Variieren des Verhältnisses der Zeiträume T1 und T2 zueinander erfolgen. Soweit erforderlich und sinnvoll, kann die Regeleinrichtung 19 alternativ oder zusätzlich auch die Zeiträume T3 und T4 variieren. Alternativ oder zusätzlich ist es möglich, an vorbestimmten Stellen zusätzlich Fördergas 9 in die Förderleitung 11 einzublasen. Hierzu ist vorzugsweise eine Gasleitung 20 parallel zur Förderleitung 11 verlegt. In der Gasleitung 20 wird ausschließlich Fördergas 9 geführt, aber kein Fördergut 6. Die Gasleitung 20 und die Förderleitung 11 sind an vorbestimmten Stellen über Ventile 21 miteinander verbunden. Das Einblasen des zusätzlichen Fördergases 9 erfolgt durch entsprechendes Ansteuern der Ventile 21 durch die Regeleinrichtung 19. Alternativ oder zusätzlich ist es möglich, durch entsprechende Ansteuerung des Gasverdichters 8 den Überdruck p zu variieren.

Wenn im Rahmen der obenstehend erläuterten Ausgestaltungen das Fördergut 6 aus dem Druckgefäß 4 vollständig in die Förderleitung 11 eingespeist und zum Extrusionskopf 1 gefördert ist, wird die Förderung des Förderguts 6 kurzzeitig unterbrochen. Nach Abbau des Überdrucks p wird das Druckgefäß 4 geöffnet, erneut aus dem Vorratsbehälter 5 befüllt und wieder geschlossen. Sodann wird wieder die Förderung des Förderguts 6 begonnen. Alternativ ist es möglich, mehrere Druckgefäße 4 vorzusehen, die parallel oder in Reihe geschaltet sein können. Durch diese Ausgestaltungen ist es möglich, die Förderung des Förderguts 6 quasi kontinuierlich vorzunehmen.

Zusammengefasst betrifft die vorliegende Erfindung somit folgenden Sachverhalt:
Ein aus Körnern 7 bestehendes Fördergut 6 wird aus einem Druckgefäß 4 an einer Einspeisestelle 10 in eine Förderleitung 11 eingespeist, von dort über die Förderleitung 11 zu einer Ausspeisestelle 13 gefördert, dort aus der Förderleitung 11 ausgespeist und einem Extrusionskopf 1 zugeführt. Im Extrusionskopf 1 wird das Fördergut 6 plastifiziert und danach über eine Düse 16 des Extrusionskopfes 1 punktuell extrudiert. Der Extrusionskopf 1 wird während des Extrudierens des plastifizierten Förderguts 6 mittels eines Manipulators 2 dynamisch verfahren. Ein Fördergas 9 wird im Bereich der Einspeisestelle 10 mittels eines Gasverdichters 8 in die Förderleitung 11 eingedrückt. Es entweicht im Bereich der Ausspeisestelle 13 an einer Abscheidestelle 14 aus der Förderleitung 11.

Die vorliegende Erfindung weist viele Vorteile auf. Aufgrund der Förderung des Förderguts 6 durch Drücken durch die Förderleitung 11 (im Gegensatz zu Saugen) wird eine einfache Förderung des Förderguts 6 ermöglicht, ohne den Betrieb des Extrusionskopfes 1 (insbesondere dessen dynamische Positionierung einschließlich der statischen und/oder dynamischen Positionierungsgenauigkeit) negativ zu beeinflussen. Aufgrund der Dichtstromförderung ergibt sich ein energieeffizienter, verschleißarmer Betrieb der Förderstrecke. Dies gilt insbesondere bei einer Pfropfenförderung. Es können sehr hohe Beladungen (in der Regel von mindestens 100:1, im Extremfall bis 400:1) über lange Förderstrecken (teilweise bis mehrere km) gefördert werden. Insbesondere bei einer Anwendung in einem Druckerpark mit mehreren Fertigungsmaschinen können dadurch längere Förderleitungen 11 verwendet werden, die beispielsweise aus einem gemeinsamen Druckgefäß 4 mit Fördergut 6 gespeist werden. Unter Umständen können innerhalb der Förderstrecke zusätzliche Behandlungen des Förderguts 6 erfolgen, beispielsweise eine Trocknung oder eine Vorwärmung. Eventuell kann es sogar möglich sein, verschiedene Fördergüter 6 aus mehreren Druckgefäßen 4 in kontrollierter Weise sequenziell in die Förderleitung 11 einzuspeisen und dadurch dem Extrusionskopf 1 ein bereits vorgemischtes Gemisch von Fördergütern 6 zuzuführen, das im Extrusionskopf 1 nur noch aufgeschmolzen werden muss, aber nicht mehr weiter vermischt werden muss.

## Patentansprüche

1. Betriebsverfahren für eine Fertigungsmaschine,
- wobei ein aus Körnern (7) mit einer mittleren Korngröße (d0) bestehendes Fördergut (6) aus einem Druckgefäß (4) an einer Einspeisestelle (10) in eine Förderleitung (11) eingespeist wird, von dort über die Förderleitung (11) zu einer Ausspeisestelle (13) gefördert wird, dort aus der Förderleitung (11) ausgespeist wird und einem Extrusionskopf (1) zugeführt wird,
- wobei das Fördergut (6) im Extrusionskopf (1) plastifiziert und nach dem Plastifizieren über eine Düse (16) des Extrusionskopfes (1) punktuell extrudiert wird,
- wobei der Extrusionskopf (1) während des Extrudierens des plastifizierten Förderguts (6) mittels eines Manipulators (2) dynamisch verfahren wird,
- wobei ein Fördergas (9) im Bereich der Einspeisestelle (10) mittels eines Gasverdichters (8) in die Förderleitung (11) eingedrückt wird und im Bereich der Ausspeisestelle (13) an einer Abscheidestelle (14) aus der Förderleitung (11) entweicht,
**dadurch gekennzeichnet, dass** das Fördergut (6) zum Einspeisen in die Förderleitung (11) mittels des Gasverdichters (8) unter Umgehung der Förderleitung (11) über ein erstes Ventil (12) temporär mit einem Gas-Überdruck (p) beaufschlagt wird, und dass während des Beaufschlagens des Druckgefäßes (4) mit dem Gas-Überdruck (p) ein in der Förderleitung (11) zwischen der Einspeisestelle (10) und dem Gasverdichter (8) angeordnetes zweites Ventil (15) geschlossen wird.

2. Betriebsverfahren nach Anspruch 1,
**dadurch gekennzeichnet, dass** die Ausspeisestelle (13) das letzte Stück der Förderleitung (11) bildet und als für das Fördergas (9) durchlässiger Schlauch ausgebildet ist.

3. Betriebsverfahren nach einem der obigen Ansprüche,
**dadurch gekennzeichnet , dass** in der Förderleitung (11) eine Dichtstromförderung erfolgt, insbesondere eine Pfropfenförderung.

4. Betriebsverfahren nach Anspruch 3,
**dadurch gekennzeichnet, dass** ein Verhältnis von geförderter Masse an Fördergut (6) und geförderter Masse an Fördergas (9) bei 100:1 oder darüber liegt.

5. Betriebsverfahren nach einem der obigen Ansprüche,
**dadurch gekennzeichnet, dass** der Gas-Überdruck (p) oberhalb von 1 bar liegt.

6. Betriebsverfahren nach einem der obigen Ansprüche,
**dadurch gekennzeichnet, dass** die mittlere Korngröße (d0) mindestens 0,5 mm beträgt.

7. Betriebsverfahren nach einem der obigen Ansprüche,
**dadurch gekennzeichnet, dass** die Körner (7) kugelförmig ausgebildet sind.

8. Betriebsverfahren nach einem der obigen Ansprüche,
**dadurch gekennzeichnet, dass** die statistische Streuung der mittleren Korngröße (d0) maximal 20% beträgt.

9. Betriebsverfahren nach einem der obigen Ansprüche,
**dadurch gekennzeichnet , dass** mittels mindestens eines Sensors (18) ein Förderzustand (F) in der Förderleitung (11) erfasst wird, dass der Förderzustand (11) in einer Regeleinrichtung (19) mit einem Sollförderzustand (F*) verglichen wird und dass das Einspeisen des Förderguts (6) in die Förderleitung (11) und/oder das Fördern des Förderguts (6) in der Förderleitung (11) von der Regeleinrichtung (19) in Abhängigkeit von dem Vergleich geregelt werden.

10. Fertigungsmaschine,
- wobei die Fertigungsmaschine ein Druckgefäß (4), eine Förderleitung (11) mit einer Einspeisestelle (10) und einer Ausspeisestelle (13), einen Extrusionskopf (1) mit einer Düse (16), einen Manipulator (2) und einen Gasverdichter (8) aufweist,
- wobei ein aus Körnern (7) mit einer mittleren Korngröße (d0) bestehendes Fördergut (6) aus dem Druckgefäß (4) an der Einspeisestelle (10) in die Förderleitung (11) eingespeist wird, über die Förderleitung (11) zur Ausspeisestelle (13) gefördert wird, dort aus der Förderleitung (11) ausgespeist wird und dem Extrusionskopf (1) zugeführt wird,
- wobei das Fördergut (6) im Extrusionskopf (1) plastifiziert und nach dem Plastifizieren über die Düse (16) extrudiert wird,
- wobei der Extrusionskopf (1) an dem Manipulator (2) angeordnet ist und während des Extrudierens des plastifizierten Förderguts (6) mittels des Manipulators (2) dynamisch verfahren wird,
- wobei mittels des Gasverdichters (8) im Bereich der Einspeisestelle (10) ein Fördergas (9) in die Förderleitung (11) eingedrückt wird und im Bereich der Ausspeisestelle (13) an einer Abscheidestelle (14) aus der Förderleitung (11) entweicht,
**dadurch gekennzeichnet, dass** der Gasverdichter (8) unter Umgehung der Förderleitung (11) über ein erstes Ventil (12) mit dem Druckgefäß (4) verbunden ist und dass der Gasverdichter (8) das Druckgefäß (4) zum Einspeisen des Förderguts (6) in die Förderleitung (11) durch Öffnen des ersten Ventils (12) temporär mit einem Gas-Überdruck (p) beaufschlagt, und dass der Gasverdichter (8) mit der Förderleitung (11) über ein zweites Ventil (15) verbunden ist und dass das zweite Ventil (15) während des Beaufschlagens des Druckgefäßes (4) mit dem Gas-Überdruck (p) geschlossen wird.

11. Fertigungsmaschine nach Anspruch 10,
**dadurch gekennzeichnet, dass** die Ausspeisestelle (13) das letzte Stück der Förderleitung (11) bildet und als für das Fördergas (9) durchlässiger Schlauch ausgebildet ist.

12. Fertigungsmaschine nach einem der Ansprüche 10 oder 11,
**dadurch gekennzeichnet , dass** in der Förderleitung (11) eine Dichtstromförderung, insbesondere eine Pfropfenförderung ausgeführt ist.

13. Fertigungsmaschine nach Anspruch 12,
**dadurch gekennzeichnet, dass** ein Verhältnis von geförderter Masse an Fördergut (6) und geförderter Masse an Fördergas (9) bei 100:1 oder darüber einstellbar ist.

14. Fertigungsmaschine nach einem der Ansprüche 10 bis 13,
**dadurch gekennzeichnet , dass** mittels des Gasverdichters (8) ein Gas-Überdruck (p) oberhalb von 1 bar erzeugbar ist.

15. Fertigungsmaschine nach einem der Ansprüche 10 bis 14,
**dadurch gekennzeichnet , dass** mittels mindestens eines Sensors (18) ein Förderzustand (F) in der Förderleitung (11) erfasst wird, dass der Förderzustand (F) in einer Regeleinrichtung (19) mit einem Sollförderzustand (F*) verglichen wird und dass das Einspeisen des Förderguts (6) in die Förderleitung (11) und/oder das Fördern des Förderguts (6) in der Förderleitung (11) von der Regeleinrichtung (19) in Abhängigkeit von dem Vergleich geregelt wird.

## Claims

1. Operational method for a production machine,
- wherein conveyed goods (6) consisting of grains (7) with an average grain size (d0) are fed from a pressure vessel (4) into a conveyor line (11) at a feed point (10), conveyed from there to a discharge point (13) via the conveyor line (11), discharged out of the conveyor line (11) there and supplied to an extrusion head (1),
- wherein the conveyed goods (6) are plasticised in the extrusion head (1) and after plasticisation extruded in a punctiform manner via a nozzle (16) of the extrusion head (1),
- wherein the extrusion head (1) is moved dynamically by means of a manipulator (2) during the extrusion of the plasticised conveyed goods (6),
- wherein a conveyor gas (9) in the region of the feed point (10) is compressed into the conveyor line (11) by means of a gas compressor (8) and leaks out of the conveyor line (11) at a separation point (14) in the region of the discharge point (13),
**characterised in that** gas positive pressure (p) is temporarily applied to the conveyed goods (6) by means of the gas compressor (8) in order to feed the conveyed goods into the conveyor line (11) while bypassing the conveyor line (11) via a first valve (12), and during the application of the gas positive pressure (p) to the pressure vessel (4) a second valve (15) which is arranged in the conveyor line (11) between the feed point (10) and the gas compressor (8) is closed.

2. Operational method according to claim 1,
**characterised in that** the discharge point (13) forms the last part of the conveyor line (11) and is designed as a hose which is permeable to the conveyor gas (9).

3. Operational method according to one of the above claims,
**characterised in that** a dense phase conveying takes place in the conveyor line (11), in particular, a plug conveying.

4. Operational method according to claim 3,
**characterised in that** a ratio of conveyed mass to conveyed goods (6) and conveyed mass to conveyor gas (9) is 100:1 or above.

5. Operational method according to one of the above claims,
**characterised in that** the gas positive pressure (p) is above 1 bar.

6. Operational method according to one of the above claims,
**characterised in that** the average grain size (d0) is at least 0.5 mm.

7. Operational method according to one of the above claims,
**characterised in that** the grains (7) are spherical.

8. Operational method according to one of the above claims,
**characterised in that** the statistical variance of the average grain size (d0) is 20% at a maximum.

9. Operational method according to one of the above claims,
**characterised in that** by means of at least one sensor (18) a conveying state (F) in the conveyor line (11) is detected, the conveying state (11) in a control device (19) is compared with a target conveying state (F*) and the feeding of the conveyed goods (6) into the conveyor line (11) and/or the conveying of the conveyed goods (6) in the conveyor line (11) are regulated by the control device (19) as a function of the comparison.

10. Production machine,
- wherein the production machine has a pressure vessel (4), a conveyor line (11) with a feed point (10) and a discharge point (13), an extrusion head (1) with a nozzle (16), a manipulator (2) and a gas compressor (8),
- wherein conveyed goods (6) consisting of grains (7) with an average grain size (d0) are fed from the pressure vessel (4) into the conveyor line (11) at the feed point (10), conveyed via the conveyor line (11) to the discharge point (13), discharged out of the conveyor line (11) at the discharge point, and supplied to the extrusion head (1),
- wherein the conveyed goods (6) are plasticised in the extrusion head (1) and then extruded via the nozzle (16) after plasticisation,
- wherein the extrusion head (1) is arranged on the manipulator (2) and is moved dynamically by means of the manipulator (2) during the extrusion of the plasticised conveyed goods (6),
- wherein a conveyor gas (9) is compressed into the conveyor line (11) in the region of the feed point (10) by means of the gas compressor (8) and leaks out of the conveyor line (11) at a separation point (14) in the region of the discharge point (13),
**characterised in that** while bypassing the conveyor line (11) via a first valve (12) the gas compressor (8) is connected to the pressure vessel (4) and that the gas compressor (8) temporarily applies a gas positive pressure (p) to the pressure vessel (4) in order to feed the conveyed goods (6) into the conveyor line (11) by opening the first valve (12), and the gas compressor (8) is connected to the conveyor line (11) via a second valve (15) and during the application of the gas positive pressure (p) to the pressure vessel (4), the second valve (15) is closed.

11. Production machine according to claim 10,
**characterised in that** the discharge point (13) forms the last part of the conveyor line (11) and is designed as a hose which is permeable to the conveyor gas (9).

12. Production machine according to one of claims 10 or 11,
**characterised in that** in the conveyor line (11) dense phase conveying, in particular, plug conveying is performed.

13. Production machine according to claim 12,
**characterised in that** a ratio of conveyed mass of conveyed goods (6) and conveyed mass of conveyor gas (9) can be set at 100:1 or above.

14. Production machine according to one of claims 10 to 13,
**characterised in that** a gas positive pressure (p) above 1 bar can be generated by means of the gas compressor (8).

15. Production machine according to one of claims 10 to 14,
**characterised in that** a conveying state (F) is detected in the conveyor line (11) by means of at least one sensor (18), the conveying state (F) in a control device (19) is compared with a target conveying state (F*) and the feeding of the conveyed goods (6) into the conveyor line (11) and/or the conveying of the conveyed goods (6) in the conveyor line (11) is controlled by the control device (19) depending on the comparison.

## Revendications

1. Procédé pour faire fonctionner une machine de fabrication,
- dans lequel on injecte un produit (6) à transporter, constitué de grains (7) d'une granulométrie (d0) moyenne, d'un récipient (4) sous pression dans un conduit (11) de transport en un point (10) d'injection, de là, on le transporte par le conduit (11) de transport à un point (13) d'éjection, on l'y éjecte du conduit (11) de transport et on l'envoie à une tête (1) d'extrusion,
- dans lequel on plastifie, dans la tête (1) d'extrusion, le produit (6) à transporter et, après la plastification, on l'extrude ponctuellement par une buse (16) de la tête (1) d'extrusion,
- dans lequel on déplace dynamiquement, au moyen d'un manipulateur (2), la tête (1) d'extrusion pendant l'extrusion du produit (6) à transporter plastifié,
- dans lequel on refoule, dans le conduit (11) de transport, au moyen d'un compresseur (8) de gaz, un gaz (9) de transport dans la région du point (10) d'injection et il se dégage du conduit (11) de transport, dans la région du point (13) d'éjection, en un point (14) de séparation,
**caractérisé en ce que**
l'on soumet, temporairement à une surpression (p) de gaz, le produit (6) à transporter pour l'injection dans le conduit (11) de transport, au moyen du compresseur (8) de gaz, en contournant le conduit (11) de transport par une première vanne (12) et **en ce que**, pendant que l'on soumet le récipient (4) sous pression à la surpression (p) de gaz, on ferme une deuxième vanne (15) montée dans le conduit (11) de transport entre le point (10) d'injection et le compresseur (8) de gaz.

2. Procédé suivant la revendication 1,
**caractérisé en ce que**
le point (13) d'éjection forme le dernier tronçon du conduit (11) de transport et est constitué sous la forme d'un conduit souple perméable au gaz (9) de transport.

3. Procédé suivant l'une des revendications précédentes,
**caractérisé en ce que**,
dans le conduit (11) de transport se produit un transport par courant dense, notamment un transport par gouttes.

4. Procédé suivant la revendication 3,
**caractérisé en ce qu'**
un rapport de la masse transportée de produit (6) à transporter et de la masse transportée de gaz (9) de transport est supérieur ou égal à 100:1.

5. Procédé suivant l'une des revendications précédente,
**caractérisé en ce que**
la surpression (p) de gaz est supérieure à 1 bar.

6. Procédé suivant l'une des revendications précédentes,
**caractérisé en ce que**
la granulométrie (d0) moyenne est d'au moins 0,5 mm.

7. Procédé suivant l'une des revendications précédentes,
**caractérisé en ce que**
les grains (7) sont constitués sous la forme de sphères.

8. Procédé suivant l'une des revendications précédentes,
**caractérisé en ce que**
la dispersion statistique de la granulométrie (d0) moyenne est au maximum de 20%.

9. Procédé suivant l'une des revendications précédentes,
**caractérisé en ce que**
l'on relève un état (F) de transport dans le conduit (11) de transport au moyen d'un capteur (18), **en ce que** l'on compare l'état (F) de transport dans un dispositif (19) de régulation à un état (F*) de transport de consigne et **en ce que** l'on régule, en fonction de la comparaison par le dispositif (19) de régulation, l'injection du produit (6) à transporter dans le conduit (11) de transport et/ou le transport du produit (6) à transporter dans le conduit (11) de transport.

10. Machine de fabrication,
- dans laquelle la machine de fabrication a un récipient (4) sous pression, un conduit (11) de transport ayant un point (10) d'injection et un point (13) d'éjection, une tête (1) d'extrusion ayant une buse (16), un manipulateur (2) et un compresseur (8) de gaz,
- dans laquelle on injecte un produit (6) à transporter, constitué de grains (7) d'une granulométrie (d0) moyenne d'un récipient (4) sous pression, dans un conduit (11) de transport en un point (10) d'injection, on le transporte par le conduit (11) de transport à un point (13) d'éjection, on l'y éjecte du conduit (11) de transport et on l'envoie à une tête (1) d'extrusion,
- dans laquelle on plastifie, dans la tête (1) d'extrusion, le produit (6) à transporter et, après la plastification, on l'extrude par une buse (16) de la tête (1) d'extrusion,
- dans laquelle la tête (1) d'extrusion est montée sur le manipulateur (2) et on déplace dynamiquement, au moyen d'un manipulateur (2), la tête (1) d'extrusion pendant l'extrusion du produit (6) à transporter plastifié,
- dans laquelle on refoule, dans le conduit (11) de transport, au moyen d'un compresseur (8) de gaz, un gaz (9) de transport dans la région du point (10) d'injection et il se dégage du conduit (11) de transport, dans la région du point (13) d'éjection, en un point (14) de séparation,
**caractérisée en ce que** le compresseur (8) de gaz communique, en contournant le conduit (11) de transport par une troisième vanne (12), avec le récipient (4) sous pression et **en ce que** le compresseur (8) de gaz soumet le récipient (4) sous pression, pour l'injection du produit (6) à transporter dans le conduit (11) de transport, à une surpression (p) de gaz, temporairement par ouverture de la première vanne (12), et **en ce que** le compresseur (8) de gaz communique avec le conduit (11) de transport par une deuxième vanne (15) et **en ce que** l'on ferme la deuxième vanne (15) pendant que le récipient (4) sous pression est soumis à la surpression (p) de gaz.

11. Machine de fabrication suivant la revendication 10,
**caractérisée en ce que**
le point (13) d'éjection forme le dernier tronçon du conduit (11) de transport et est constitué sous la forme d'un conduit souple perméable au gaz (9) de transport.

12. Machine de fabrication suivant l'une des revendications 10 ou 11,
**caractérisée en ce que**,
dans le conduit (11) de transport est réalisé un transport par courant dense, notamment un transport par gouttes.

13. Machine de fabrication suivant la revendication 12,
**caractérisée en ce qu'**
un rapport de la masse transportée de produit (6) à transporter à la masse transportée de gaz (9) de transport peut être réglé à une valeur supérieure ou égale à 100:1.

14. Machine de fabrication suivant l'une des revendications 10 à 13,
**caractérisée en ce qu'**
une surpression (p) de gaz au dessus de 1 bar peut être produite au moyen du compresseur (8) de gaz.

15. Machine de fabrication suivant l'une des revendications 10 à 14,
**caractérisée en ce qu'**
au moyen d'un capteur (18), on relève un état (F) de transport dans le conduit (11) de transport, **en ce que** l'on compare l'état (F) de transport dans un dispositif (19) de régulation à un état (F*) de transport de consigne et **en ce que** l'on régule, par le dispositif (19) de régulation en fonction de la comparaison, l'injection du produit (6) à transporter dans le conduit (11) de transport et/ou le transport du produit (6) à transporter dans le conduit (11) de transport.
